**Europäisches Patentamt**

**European Patent Office**

**Office européen des brevets**

(19)

(11) Veröffentlichungsnummer: **0 112 975**
**B1**

(12) **EUROPÄISCHE PATENTSCHRIFT**

(45) Veröffentlichungstag der Patentschrift:
06.08.86

(51) Int. Cl.⁴: **G 06 K 11/06**

(21) Anmeldenummer: **83109749.8**

(22) Anmeldetag: **29.09.83**

(54) Einrichtung zur Erfassung einer x-y-Position.

(30) Priorität: **25.11.82 DE 3243712**
**25.11.82 DE 3243711**

(43) Veröffentlichungstag der Anmeldung:
**11.07.84 Patentblatt 84/28**

(45) Bekanntmachung des Hinweises auf die Patenterteilung:
**06.08.86 Patentblatt 86/32**

(84) Benannte Vertragsstaaten:
**AT BE CH DE FR GB IT LI NL SE**

(56) Entgegenhaltungen:
**DE - A - 2 166 511**
**DE - A - 2 720 615**
**DE - A - 2 909 847**
**DE - A - 3 031 751**
**DE - C - 2 615 785**
**FR - A - 2 181 350**
**GB - A - 2 087 611**
**US - A - 3 449 516**
**US - A - 4 018 943**
**US - A - 4 350 741**

(73) Patentinhaber: **PREH, Elektrofeinmechanische Werke Jakob Preh Nachf. GmbH & Co.,**
**Postfach 1740 Schweinfurter Strasse 5, D-8740 Bad Neustadt/Saale (DE)**

(72) Erfinder: **Ambros, Peter, Dipl.-Chem., Am Wacholderrain 12, D-8741 Leutershausen (DE)**
Erfinder: **Budig, Walter, Buchenweg 1, D-8741 Wülfershausen (DE)**
Erfinder: **Koch, Hans-Peter, Dipl.-Ing., Wagstätter Strasse 35, D-8740 Bad Neustadt/Saale (DE)**
Erfinder: **Limpert, Rudolf, Dipl.-Math., Obertorstrasse 11, D-8741 Strahlungen (DE)**
Erfinder: **Siede, Heinz-Jürgen, Dipl.-Ing., Altenbergstrasse 2, D-8740 Bad Neustadt/S. (DE)**
Erfinder: **Westermeir, Gisela, Ing. grad., Rhönblick 31, D-8741 Hohenroth (DE)**

**Beschreibung**

Die Erfindung betrifft eine Einrichtung zur Erfassung einer x-y-Position bestehend aus einer Kontaktplatte mit einer flächigen Widerstandsschicht, an deren vier Seiten Elektrodenanordnungen vorgesehen sind, wobei eine Spannung abwechselnd an zwei gegenüberliegende Elektrodenanordnungen gelegt ist und jede Elektrodenanordnung von einer Mehrzahl von gegeneinander entkoppelten Punktelektroden gebildet ist und einem Griffel der eine seiner Position auf der Widerstandsschicht entsprechende Teilspannung an dieser abgreift, die ausgewertet wird.

Eine derartige Einrichtung ist in der US-PS 3 449 516 beschrieben. Dort soll die Widerstandsschicht durch ein mehrlagiges Aufsprühen eines Graphitfilms geschaffen werden. Eine solche Widerstandsschicht verkratzt leicht. Verkratzungen beeinflussen jedoch den Widerstandswert der Schicht, so dass nicht mehr sichergestellt ist, dass die vom Griffel abgegriffene Teilspannung seiner jeweiligen x-y-Position auf der Widerstandsschicht analog ist. Damit wird die Einrichtung schnell unbrauchbar. Um wenigstens die durch den Griffel selbst, infolge dessen manueller Bedienung fast zwangsläufig auftretenden Verkratzungen auf ein Minimum zu beschränken, könnte daran gedacht werden, die Spitzenelektrode weich, beispielsweise aus Kupfer, herzustellen. Dies hätte zur Folge, dass sich die Griffelspitze mit der Zeit auf der Oberfläche der Widerstandsschicht abreibt. Der Abrieb seinerseits beeinflusst jedoch ebenfalls den Widerstandswert der Schicht.

Die Widerstandsschicht der US-PS 3 449 516 ist ausserdem infolge des mehrlagigen Aufsprühens in ihrer Oberfläche nicht sehr glatt. Dies erleichtert Verkratzungen und erschwert die Auswertung. Denn auf einer Bewegungsstrecke wird der Griffel über die Unebenheiten «springen», wobei er von der Widerstandsschicht abhebt. Es ergibt sich dadurch bei der Auswertung ein zusätzliches Übergangsrauschen.

Eine ähnliche Einrichtung ist in der GB-PS 12 80 341 beschrieben. Bei dieser soll die Widerstandsschicht aus einem harten Verschleissmaterial, wie einer leitenden Plastik, oder einer leitenden Keramik oder einem Widerstandspapier bestehen. Solche Materialien mögen aufgrund einer gewissen Zähigkeit verschleissfest sein. Ihre Härte und Glätte ist jedoch gering, so dass auch hier die genannten Erscheinungen auftreten können. Ausserdem ist die Gleitfähigkeit einer solchen Materialoberfläche gering, so dass ein harter Griffel auf einer solchen Oberfläche nur schwer gleitet.

Bei ähnlichen Einrichtungen (vgl. DE-AS 15 49 811, US-PS 3 497 617) ist die Widerstandsschicht zu ihrem Schutz durch eine harte Isolierschicht abgedeckt. Dabei erfolgt der Abgriff kapazitiv und nicht galvanisch wie bei der Einrichtung der eingangs genannten Art. Eine zusätzliche Schutzschicht auf die Widerstandsschicht aufzubringen, ist nachteilig, da Schwankungen in der Dicke der Schutzschicht die abgegriffene Spannung verfälschen. Ausserdem ist die Herstellung der Schutzschicht mit zusätzlichen Kosten verbunden. Ungünstig beim kapazitiven Abgriff von Teilspannungen der Widerstandsschicht ist, dass elektrische Streufelder in die Umgebung der Kontaktplatte abgestrahlt werden, was zu Störungen führen kann.

In der DE-PS 738 414 ist ein Verfahren beschrieben, durch das eine Widerstandsschicht mit sehr glatter Oberfläche hergestellt werden kann. Dabei wird die die Widerstandsschicht bildende Widerstandsmasse auf einen Zwischenträger mit polierter Oberfläche aufgebracht. Nach dem Aushärten wird die Widerstandsschicht mit ihrer dem Zwischenträger gegenüberliegenden Oberfläche auf einem endgültigen Träger befestigt und der glatte Zwischenträger wird abgenommen. Dieses Verfahren wird als Umkehrlaminiertechnik bezeichnet. Weiterbildungen der Umkehrlaminiertechnik sind beispielsweise in der DE-OS 30 31 751 und der DE-OS 31 35 554 beschrieben. In der Umkehrlaminiertechnik hergestellte Widerstandsschichten eignen sich als Potentiometerbahnen, auf denen ein Schleifer gleitet. Der Schleifer gleitet auf der Potentiometerbahn mit einem vorbestimmten, nicht zu hohen Anpressdruck. Die an sich geringe Härte der in Umkehrlaminiertechnik hergestellten Potentiometerbahn stört dabei nicht. Als Widerstandsschicht, auf der direkt ein manuell bewegter Griffel bewegt wird, eignet sich eine solche Potentiometerbahn nicht, da sie zu schnell verkratzt wäre.

In der DE-PS 26 15 785 und der DE-PS 27 20 615 sind Verfahren zur Herstellung von Schichtwiderständen beschrieben. Feinstgemahlene Trägerteilchen werden mit einem Metall beschichtet. Die so beschichteten Trägerteilchen werden in einem Pyrolyseprozess von Kohlenstoff umhüllt. Danach werden diese Teilchen mit einem Bindemittel gemischt. Die dadurch entstandene Widerstandspaste wird auf einen Träger aufgebracht. Es wurde gefunden, dass eine aus einer solchen Widerstandsmasse hergestellte Widerstandsschicht äusserst hart wird, wenn die Trägerteilchen aus Siliziumdioxid bestehen. Für Potentiometerbahnen eignen sich solche harten Widerstandsschichten nur bedingt.

Aufgabe der Erfindung ist es, eine Einrichtung der eingangs genannten Art vorzuschlagen, bei der die Materialpaarung zwischen der Widerstandsschicht und dem Griffel so gewählt ist, dass während der manuellen Bewegung des Griffels auf der Widerstandsschicht eine sichere, galvanische Kontaktierung gewährleistet ist, bei der die vom Griffel an der Widerstandsschicht abgegriffenen Teilspannungen den x-y-Positionen des Griffels proportional sind, und insbesondere der Griffel die Kontaktplatte nicht verkratzt und sich nicht abreibt, wozu die Widerstandsschichten hart, abriebfest, glatt und gleitfähig ausgelegt ist.

Erfindungsgemäss ist obige Aufgabe einer Einrichtung der eingangs genannten Art dadurch gelöst, dass der Griffel eine harte Spitze aufweist und dass die Widerstandsschicht aus Trägerpartikeln mit einer Härte zwischen 5 und 9 der Mohsschen-Härteskala besteht, die pyrolytisch mit Kohlenstoff beschichtet und in ein Bindemittel eingebettet sind, wodurch die Widerstandsschicht hart und gleitfähig ist, und dass die für die Griffelbewegung vorgesehene Oberfläche der Widerstandsschicht die auf einen glatten, entfernten Zwischenträger aufgebrachte Unterfläche der ausgehärteten Widerstandsmasse ist. Die Härte der Trägerpartikel begründet die Härte der Widerstandsschicht. Die Härte z.B. von Siliziumdioxid-Trägerpartikeln liegt nach der Mohsschen-Härteskala bei dem Wert 7 bzw. bei dem Wert 820 nach Knoop. Die Kohlenstoffbeschichtung führt zu einer Gleitfähigkeit, so dass der Griffel ruckfrei über die Widerstandsschicht zu führen ist. Die Härte der Widerstandsschicht ist so gross, dass die Griffelspitze vorzugsweise eine Stahlspitze ist. Diese reibt sich nicht auf der Widerstandsschicht ab und zerkratzt diese auch nicht. Die Glattheit der Oberfläche der Widerstandsschicht ist dadurch erreicht, dass diese im Umkehrlaminierverfahren hergestellt ist. Im Zusammenhang mit der hohen Härte führt sie dazu, dass der Griffel sprungfrei über die Widerstandsschicht gleitet, wodurch eine kontinuierliche Kontaktgabe gewährleistet ist. Die im Zuge einer Griffelbewegung abgegriffenen Teilspannungen weisen keine Spannungsprünge auf, die nicht der Griffelbewegung analog sind. Der an sich bekannte Vorteil der Umkehrlaminiertechnik, dass die elektrisch leitenden Trägerpartikel an der Oberfläche der Widerstandsschicht konzentriert sind, wirkt sich hierbei günstig aus.

Die pyrolytische Kohlenstoffbeschichtung der Trägerpartikel verkleinert bekanntermassen den Temperaturkoeffizienten der Widerstandsschicht. Dies wirkt sich auch hier vorteilhaft aus. Alternativ können die Trägerpartikel neben der Kohlenstoffbeschichtung noch zusätzlich mit einer Metallverbindung beschichtet sein.

Darüber hinaus ist die Abtastung der Widerstandsschicht mittels des Griffels nicht empfindlich gegen Verschmutzungen der Widerstandsschicht, was bei der frei in der Umgebung liegenden Widerstandsschicht besonders vorteilhaft ist.

Ein Griffel zur Abtastung der Widerstandsschicht ist mit einer Griffhülse, an deren Spitze eine dieser gegenüber elektrisch isolierte Spitzenelektrode angeordnet ist, und mit einer manuell zu betätigenden Schalteinrichtung versehen, die ein Erfassungssignal erzeugt, auf das hin die x-y-Position des Griffels einer Datenerfassungseinrichtung zugeführt wird. Ein solcher Griffel ist in der DE-OS 29 09 847 beschrieben. Um den Griffel ruhig über die Widerstandsschicht führen zu können und dabei die Schalteinrichtung betätigen zu können, ohne dass ein zusätzlicher Druck auf die Widerstandsschicht ausgeübt werden muss oder die Betätigung der Schalteinrichtung eine Griffelverlagerung befürchten lässt, ist in vorteilhafter Ausgestaltung der Erfindung die Griffhülse elektrisch leitend. An ihrer Aussenseite ist eine ihr gegenüber elektrisch isolierte Flächenelektrode angeordnet. Diese und die Griffhülse sind mit einem Schaltelement verbunden, das das Erfassungssignal erzeugt, sobald die Griffhülse und die Flächenelektrode manuell berührt sind.

Weitere vorteilhafte Ausgestaltungen der Erfindung ergeben sich aus der folgenden Beschreibung eines Ausführungsbeispiels. In der Zeichnung zeigen:

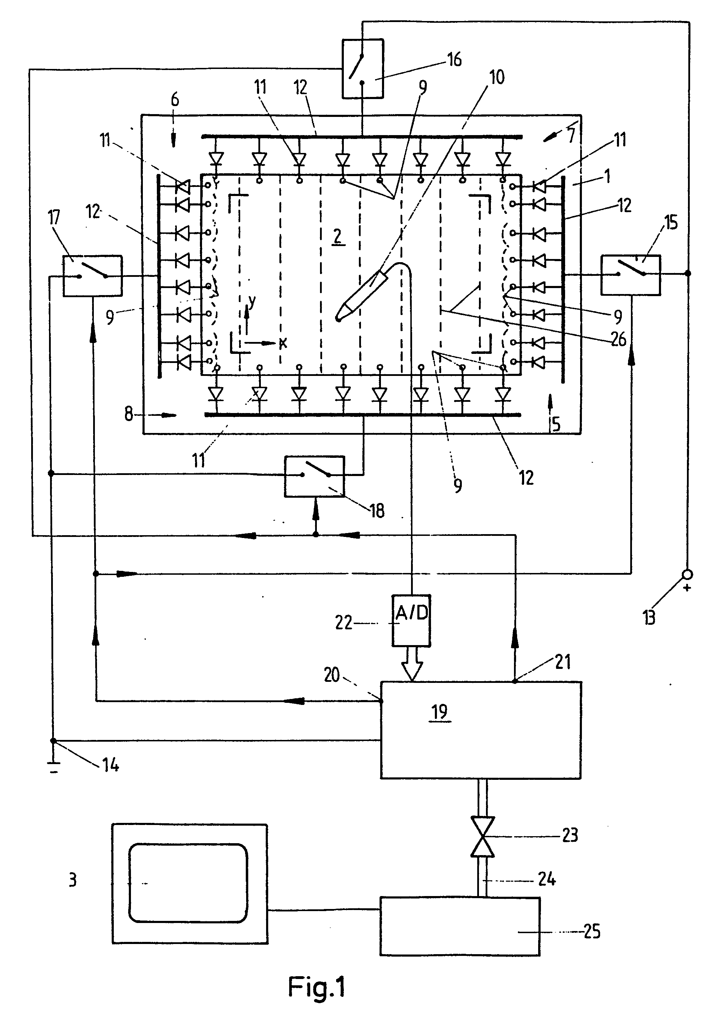

Figur 1 einen elektrischen Schaltplan der Einrichtung schematisch,

Figur 2 einen Teil-Querschnitt der Widerstandsschicht mit Kontaktplatte vergrössert,

Figur 3 einen Griffel der Einrichtung im Längsschnitt und

Figur 4 ein Schaltbild der elektrischen Griffelanschlüsse schematisch.

Auf eine Kontaktplatte 1 ist eine Widerstandsschicht 2 aufgebracht. Die Fläche der Widerstandsschicht 2 entspricht in ihrem Format dem Format eines Bildschirms 3. Die Kontaktplatte 1 besteht beispielsweise aus Hartpapier oder Epoxidharz oder Glas.

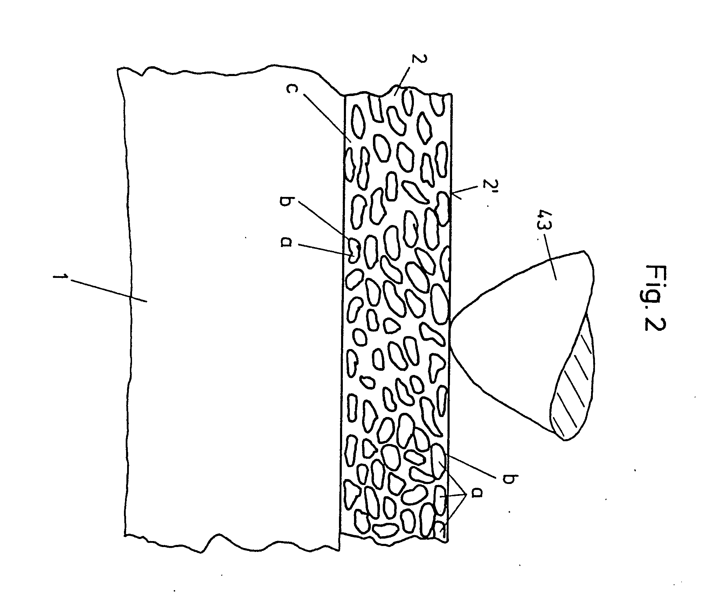

Die Widerstandsschicht 2 weist harte, feuerfeste Trägerpartikel a auf. Deren Ausdehnungen liegen in der Grösse von 5 μm. In jedem Fall liegen die Ausdehnungen unter 20 μm. Vorzugsweise haben die Trägerpartikel a eine plättchenförmige oder linsenförmige Gestalt (vgl. Fig. 2).

Die Trägerpartikel a bestehen vorzugsweise aus Aluminiumoxid, Siliziumdioxid oder Aluminium-Siliziumdioxid. Es wird ein solches Material verwendet, das eine Härte zwischen 5 und 9 der Mohsschen-Härteskala aufweist.

Die Partikel a sind entweder nur mit pyrolytisch abgeschiedenem Kohlenstoff oder mit Kohlenstoff und zusätzlich mit einer Metallverbindung beschichtet. Zur Herstellung der Beschichtung im letztgenannten Fall werden die Partikel a zunächst mit einer reduzierfähigen Metallverbindung versehen, die mit einem reduzierenden Gas unter Temperatureinwirkung zum Metall reduziert. Die Metallverbindung kann eine anorganische chemische Verbindung oder auch eine Organo-Metallverbindung sein. Die metallbeschichteten Trägerpartikel a sind in einem Pyrolyseprozess mit einer Kohlenstoffbeschichtung b versehen, der die Metallbeschichtung gegen Oxidation schützt.

Die beschichteten Trägerpartikel a werden mit einem Bindemittel c vermischt. Als Bindemittel wird ein Polymer, beispielsweise Melaminformaldehyd, Polyesterharz, Epoxidharz, Polyurethanharz, oder Acrylharz verwendet. Das Mischungsverhältnis ist etwa so gewählt, dass in der Widerstandsschicht 2 80 Gewichtsprozent Trägerpartikel mit Beschichtung und 20 Gewichtsprozent Bindemittel vorliegt.

Zur Herstellung der Widerstandsschicht 2 aus der Mischung der Trägerpartikel mit dem Bindemittel wird diese Widerstandsmasse zunächst auf die glattpolierte Oberfläche eines nicht näher dargestellten Zwischenträgers aufgebracht. Nach dem Aushärten der Widerstandsmasse wird die Widerstandsschicht 2 mit ihrer dem Zwischenträger abgewandten Seite auf die Kontaktplatte 1 auflaminiert. Der Zwischenträger wird entfernt. Danach liegt die sehr glatte Oberfläche 2' der Widerstandsschicht 2 frei.

Die Oberfläche 2' der Widerstandsschicht 2 ist sehr glatt. Ihre Glätte entspricht der des glattpolierten Zwischenträgers. Die Oberfläche 2' ist darüber hinaus sehr hart und mechanisch widerstandsfähig. Ihre Härte ist im wesentlichen gleich der Härte der Trägerpartikel a.

Ausserdem ist die Oberfläche 2' infolge der Kohlenstoffbeschichtung b der Trägerpartikel a gleitfähig.

Auf die Widerstandsschicht 2 können Markierungen, wie beispielsweise Felder oder Orientierungszeichen 4 aufgedruckt sein.

An den vier Seiten der Widerstandsschicht 2 sind Elektrodenanordnungen 5, 6 und 7, 8 angeordnet. Jede Elektrodenanordnung weist eine Mehrzahl von Punktelektroden 9 auf, die jeweils in einer Linie liegen. Die Abstände zwischen den Punktelektroden 9 sind gleich. Die Punktelektroden 9 können auf die Widerstandsschicht 2 aufgedruckt, aufgedampft bzw. auf andere Weise chemisch aufgetragen sein. Die Punktelektroden 9 können auch geätzt sein. Sie können auch aufgeklebt sein. Je nach den verwendeten Herstellungsverfahren werden die Punktelektroden 9 auf der Widerstandsschicht 2 oder zwischen der Widerstandsschicht 2 und der Kontaktplatte 1 liegen.

Beim gezeichneten Ausführungsbeispiel liegen die Punktelektroden 9 auf der Widerstandsschicht 2 beabstandet von deren vier Seiten. Dies ist nicht notwendig. Die Punktelektroden 9 können auch unmittelbar an den vier Seiten als Enden schmaler Leiterbahnen ausgebildet sein.

Jede Punktelektrode 9 ist über eine Diode 11 an eine Verbindungsleitung 12 der betreffenden Elektrodenanordnung 5 bis 8 angeschlossen. Die Verbindungsleitungen 12 sind auf der Kontaktplatte 1 angeordnet.

Die Einrichtung weist eine Gleichspannungsquelle mit einem positiven Pol 13 und einem negativen Pol 14 auf. Mit dem positiven Pol 13 sind die Verbindungsleitungen 12 der Elektrodenanordnungen 5 und 7 über einen elektronischen Schalter 15 bzw. 16 verbunden. Mit dem negativen Pol 14 sind die Verbindungsleitungen 12 der Elektrodenanordnungen 6 und 8 über einen elektronischen Schalter 17 bzw. 18 verbunden. Die Dioden 11 der Elektrodenanordnungen 5 und 6 sind so gepolt, dass bei leitenden Schaltern 15 und 17 Strom von dem Pol 13 zum Pol 14 fliesst. Die Dioden 11 der Elektrodenanordnungen 7 und 8 sind so gepolt, dass bei leitenden Schaltern 16 und 18 Strom vom Pol 13 zum Pol 14 fliesst.

Die Einrichtung weist eine, beispielsweise von einem Mikroprozessor gebildete Steuereinheit 19 auf. Diese schliesst und öffnet über einen Ausgang 20 die Schalter 15 und 17 und abwechselnd hierzu über einen Ausgang 21 die Schalter 16 und 18. Die Schalter 15 und 17 sind leitend, wenn die Schalter 16 und 18 geöffnet sind. Die Schalter 16 und 18 sind leitend, wenn die Schalter 15 und 17 geöffnet sind. Dieser Vorgang läuft zyklisch ab. Er wiederholt sich beispielsweise innerhalb von 20 µs.

Der Griffel 10 ist an einen Analog-Digital-Wandler 22 angeschlossen, welcher mit der Steuereinheit 19 verbunden ist. Über eine Schnittstelle 23 ist die Steuereinheit 19 mit einem Bus 24 einer Datenverarbeitungsanlage 25, insbesondere Mikrocomputers, verbunden, die den Bildschirm 3 steuert.

Die Funktionsweise der beschriebenen Einrichtung ist etwa folgende:

Sind die Schalter 15 und 17 leitend, dann baut sich in der Widerstandsschicht 2 ein Potentialfeld auf. In der Figur sind Äquipotentiallinien 26 des Feldes strichliert eingezeichnet. Diese verlaufen nur in der den Punktelektroden 9 ganz nahen Umgebung bauchig. Innerhalb der Orientierungszeichen 4 verlaufen sie linear parallel zwischen den Linien, auf denen die Punktelektroden 9 der Elektrodenanordnungen 5 und 6 liegen. Die Punktelektroden 9 der Elektrodenanordnungen 7 und 8 verzerren das Potentialfeld nicht, da diese Punktelektroden 9 über die Dioden 11 der Elektrodenanordnungen 7 und 8 entkoppelt sind. An jeder dieser Punktelektroden 9 auftretende Potentiale können sich nicht auf benachbarte Punktelektroden fortpflanzen.

Werden die Schalter 15 und 17 geöffnet und die Schalter 16 und 18 geschlossen, dann verlaufen die Äquipotentiallinien des sich dann einstellenden Feldes senkrecht zu den Äquipotentiallinien 26. Es sind dann die Dioden 11 der Elektrodenanordnungen 7 und 8 leitend und die Dioden 11 der Elektrodenanordnungen 5 und 6 entkoppeln die an deren Punktelektroden 9 anliegenden Potentiale.

Je dichter die Punktelektroden 9 angeordnet werden, um so grösser ist derjenige Teil der Widerstandsschicht 2, in dem mit einem geradlinigen Verlauf der Äquipotentiallinien gerechnet werden kann. Der ohmsche Quadratwiderstand der Widerstandsschicht 2 wird nicht sehr hochohmig gewählt, weil dies die aufgrund der Punktelektroden 9 unvermeidlichen Feldverzerrungen in die Widerstandsschicht 2 hinein vergrössern würde. Es hat sich gezeigt, dass ein Quadratwiderstand von 5 bis 10 kΩ günstig ist. Die Punktelektroden 9 werden andererseits nicht allzu dicht gesetzt. Denn dann würde zwischen zwei benachbarten Punktelektroden die notwendige Sperrspannung für die eine in Sperrichtung liegende Diode nicht erreicht.

Wird auf die Widerstandsschicht 2 der Griffel 10 mit seiner Spitze aufgesetzt, dann liegt an diesem dann, wenn die Schalter 15 und 17 leitend sind — also das in der Zeichnung dargestellte Potentialfeld aufgebaut ist — eine Teilspannung an, die seinem Abstand in X-Richtung von den Punktelektroden 9 der Elektrodenanordnung 6 entspricht. Diese Teilspannung wird vom Wandler 22 digitalisiert zur Steuereinheit 19 geleitet und mit einer x-Kennung versehen. Noch während der Griffel 10 auf die Widerstandsschicht 2 aufgesetzt ist, öffnen die Schalter 15 und 17 und die Schalter 16 und 18 schliessen, so dass jetzt am Griffel 10 eine Teilspannung anliegt, die seinem Abstand in Y-Richtung von den Punktelektroden 9 der Elektrodenanordnung 8 entspricht. Im Wandler 22 wird auch diese Teilspannung digitalisiert und in der Steuereinheit 19 mit einer y-Kennung versehen. Die digitalisierten x- und y-Koordinatenwerte werden der Datenverarbeitungsanlage 25 zugeführt und von dieser auf dem Bildschirm 3 dargestellt. Es leuchtet also am Bildschirm 3 der der Griffelstellung entsprechende Punkt auf.

Selbstverständlich kann die Datenverarbeitungsanlage 25 die digitalisierten x- und y-Werte in verschiedenster Weise weiterverarbeiten.

Der Eingangswiderstand des Griffels 10 bzw. des Wandlers 22 wird wesentlich hochohmiger sein als der Quadratwiderstand der Widerstandsschicht 2. Denn sonst würde der Griffel 10 zu ins Gewicht fallenden Feldverzerrungen führen.

Da der Bildschirm 3 eine begrenzte Anzahl von Leuchtpunkten hat, genügt es, die Auflösung der Einrichtung so auszulegen, dass in jeder Griffelstellung nur ein Leuchtpunkt aufleuchtet. Die Auflösung der Einrichtung ist so ausgelegt, dass beim Verschieben des Griffels 10 auf der Widerstandsschicht 2 die aufeinanderfolgenden Leuchtpunkte des Bildschirms 3 angesprochen werden.

Aufgrund des geradlinig parallelen Verlaufs der Äquipotentiallinien 26 ist erreicht, dass eine mit dem Griffel 10 über der Widerstandsschicht 2 gezogene Linie den gleichen Verlauf auch auf dem Bildschirm 3 zeigt. Wird beispielsweise mit dem Griffel 10 auf der Widerstandsschicht 2 eine Diagonale gezeichnet, dann erscheint diese Diagonale auch auf dem Bildschirm 3.

Mit der beschriebenen Einrichtung ist es möglich, dass der Benutzer mit dem Griffel 10 auf die Widerstandsschicht 2 graphische Darstellungen zeichnet und diese proportional auf dem Bildschirm 3 erscheinen und von der Datenverarbeitungsanlage 25 weiterverarbeitet werden können. Die Datenverarbeitungsanlage 25 kann auch mit entsprechender Software die Arbeit des Benutzers insoweit unterstützen, dass der Benutzer nur einen Punkt eines Symbols oder einer Gestalt angibt, deren vollständige Form die Datenverarbeitungsanlage 25 dann auf dem Bildschirm 3 erscheinen lässt.

Sollen mit der Einrichtung häufig gleiche Vorlage-Grundmuster bearbeitet werden, dann kann die Widerstandsschicht 2 auf einem gegenüber der Kontaktplatte 1 getrennten, austauschbaren Träger aufgebracht sein. Die Widerstandsschicht 2 ist dabei mit dem betreffenden Grundmuster bedruckt. Für spezielle Aufgaben stehen dann dem Benutzer verschiedene Widerstandsschichtträger mit den speziellen Grundmustern zur Verfügung. Je nach der zu bearbeitenden Aufgabe setzt er den betreffenden Träger in die Einrichtung ein. Vorzugsweise ist dabei der Träger mit einer speziellen Kodierung, beispielsweise Lochkodierung versehen, die nach dem Einsetzen des Trägers in die Einrichtung, beispielsweise mittels Optokopplern, abgetastet wird. Über die Steuereinheit 19 wird dann im Rechner 25 das dem jeweiligen Grundmuster zugeordnete Programm aufgerufen.

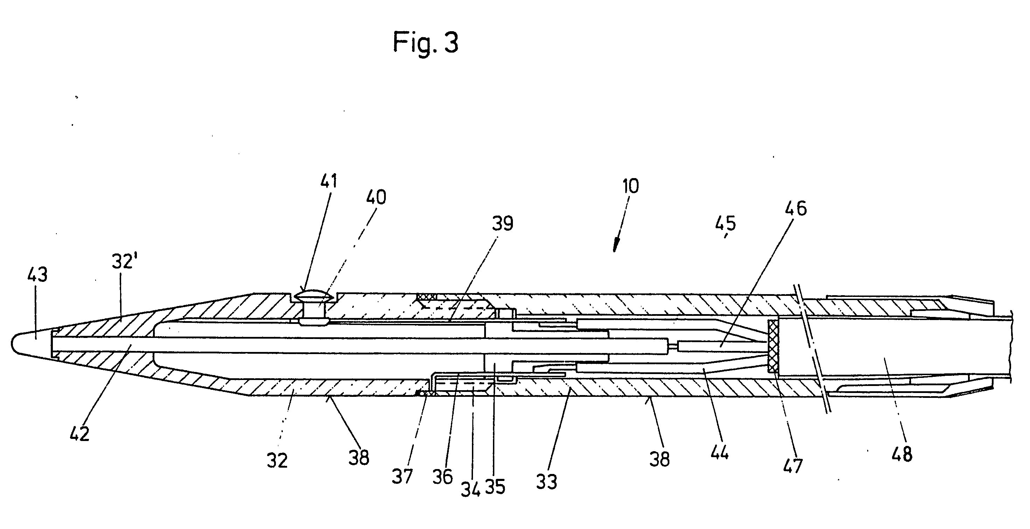

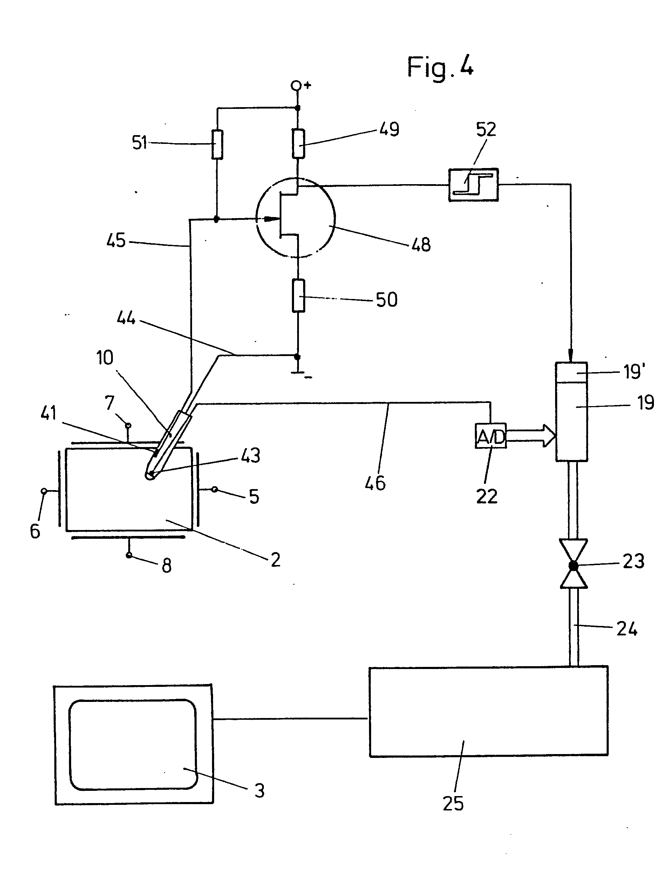

Der Griffel 10 nach den Figuren 3 und 4 ist so ausgelegt, dass die seiner x-y-Position entsprechenden Signale nicht ständig, sondern nur auf ein am Griffel 10 auszulösendes Erfassungssignal hin weiterverarbeitet werden.

Der Griffel 10 der Figur 3 weist nichtleitende Grundkörper 32 und 33 auf. Diese sind an einem Gewinde 34 miteinander verschraubt. Im Innern des Grundkörpers 33 ist ein Isolator 35 gehalten.

Der Isolator 35 fixiert einen elektrisch leitenden Bügel 36, der in einen Kontaktring 37 ausläuft. Mit dem Kontaktring 37 steht ein, die Grundkörper 32 und 33 umschliessender, elektrisch leitender Belag 38 in Verbindung.

Der Isolator 35 hält ausserdem einen Bügel 39, welcher einen Kontaktbolzen 40 trägt. Dieser durchragt den Grundkörper 32 und bildet an dessen Aussenseite eine Flächenelektrode 41, welche mit dem Belag 38 nicht in elektrisch leitender Verbindung steht. Die Flächenelektrode 41 hat etwa die Grösse einer Fingerkuppe und ist an dem Grundkörper 32 im Bereich des Zeigefingers der Hand angeordnet. Dadurch ist es für den Benutzer leicht, den Griffel 10 nach Art eines üblichen Schreibstiftes auf der Kontaktplatte 1 zu führen und dann mit dem Zeigefinger das Erfassungssignal auszulösen.

Um zu gewährleisten, dass der Griffel 10 dem Benutzer praktisch von selbst so in der Hand liegt, dass die Flächenelektrode 41 in der Reichweite des Zeigefingers liegt, sind die Grundkörper 32, 33 im Querschnitt oval ausgebildet, wobei die Flächenelektrode 41 im Bereich eines kleineren Teilradiuses angeordnet ist.

Durch den Isolator 35 ist ein Kontaktstift 42 geführt, welcher im Bereich des vorderen Endes 32' des Grundkörpers 32 mit einer Spitzenelektrode 43 aus Stahl versehen ist. Die Spitzenelektrode 43 berührt den elektrisch leitenden Belag 38 nicht. Die Spitzenelektrode 43 sitzt starr am Griffel 10.

An die Bügel 36, 39 und den Kontaktstift 42 sind Adern 44, 45 und 46 eines dreiadrigen, mit einer Schirmung 47 versehenen Kabels 48 angelötet, das durch die der Spitzenelektrode 43 gegenüberliegenden Seite aus dem Griffel 10 herausgeführt ist.

Die mit der Flächenelektrode 41 verbundene Ader 45 ist mit dem Gate-Anschluss eines Feldeffekttransistors 48 verbunden, dessen Drain- bzw. Source-Anschluss über einen Widerstand 49 bzw. 50 an einer Versorgungsspannung liegt. Über einen Widerstand 51 ist eine Vorspannung auf den Gate-Anschluss gelegt. Auf das Massepotential des Widerstands 50 ist die Ader 44 gelegt. An den Drain-Anschluss des Feldeffekttransistors 48 ist ein Schwellwertschalter 52 angeschlossen, der ein Erfassungssignal an ein Steuerteil 19' der Steuereinheit 19 leitet.

Die Funktionsweise des beschriebenen Griffels 10 ist etwa folgende:

Der Benutzer führt den Griffel 10 mit auf der Kontaktplatte 1 locker gleitender Spitzenelektrode 43 in die gewünschte Position. In der gewünschten Position berührt der Benutzer manuell die Flächenelektrode 41. Dadurch wird das Erfassungssignal erzeugt. Es braucht hierfür kein besonderer Druck auf die Widerstandsschicht 2 der Kontaktplatte 1 ausgeübt zu werden. Der Benutzer wird auch nicht dazu verleitet, die Spitzenelektrode 43 kratzend auf der Widerstandsschicht 2 zu bewegen. Denn diese ist nicht mit der Schalteinrichtung gekoppelt.

Günstig ist ausserdem, dass der Benutzer beim Aufsuchen der gewünschten Position auf der Kontaktplatte 1 und der Auslösung des Erfassungssignals nur eine Hand benötigt. Er braucht also nicht mit der einen Hand den Griffel 10 zu führen und mit der anderen Hand an einer Tastatur der Datenerfassungseinrichtung das Erfassungssignal auszulösen.

Die Spitzenelektrode 43 greift die zwischen den Elektrodenanordnungen 5 bis 8 bestehenden Teilspannungen ab. Diese liegen über die Ader 46 und den Analog/Digital-Wandler 22 digitalisiert an der Steuereinheit 19 an. Der Feldeffekttransistor 48 schaltet dadurch durch, dass der Benutzer mit dem Zeigefinger der Hand, die den Belag 38 der Grundkörper 32 und 33 des Griffels 10 umfassend berührt, die Flächenelektrode 41 berührt. Der durchgeschaltete Feldeffekttransistor 48 gibt über den Schwellwertschalter 32 ein Erfassungssignal an das Steuerteil 19'. Dadurch werden die digitalisierten x-y-Positionssignale an die Datenerfassungseinrichtung 25 gegeben. Auf dem Bildschirm 3 wird dann die jeweilige Position, die jeweilige Bewegungsstrecke des Griffels 10 auf der Kontaktplatte 1 angezeigt. Es kann auch ein der jeweiligen Griffelposition zugeordneter Vorgang in der Datenerfassungseinrichtung 25 ausgelöst werden.

Da der Benutzer beim Berühren der Flächenelektrode 41 keinen zusätzlichen Druck auf den Griffel 10 ausüben muss, erfolgt kein verstärkter Druck der Spitzenelektrode 43 auf die Kontaktplatte 1. Es kann deshalb auch die Berührungsfläche der Spitzenelektrode 43 mit der Kontaktplatte 1 sehr klein gewählt werden, was für ein hohes Auflösungsvermögen der möglichen Stellungen der Spitzenelektrode 43 gegenüber den Leuchtpunkten des Bildschirmes 3 günstig ist.

## Patentansprüche

1. Einrichtung zur Erfassung einer x-y-Position, bestehend aus einer Kontaktplatte (1) mit einer flächigen Widerstandsschicht (2), an deren vier Seiten Elektrodenanordnungen (5 bis 8) vorgesehen sind, wobei eine Spannung (13, 14) abwechselnd an zwei gegenüberliegende Elektrodenanordnungen (5, 6; 7, 8) gelegt ist und jede Elektrodenanordnung (5 bis 8) von einer Mehrzahl von gegeneinander entkoppelten Punktelektroden (9) gebildet ist, und einem Griffel (10), der eine seiner Position auf der Widerstandsschicht (2) entsprechende Teilspannung an dieser abgreift, dadurch gekennzeichnet, dass der Griffel (10) eine harte Spitze aufweist und dass die Widerstandsschicht (2) aus Trägerpartikeln (a) mit einer Härte zwischen 5 und 9 der Mohsschen-Härteskala besteht, die pyrolytisch mit Kohlenstoff (b) beschichtet und in ein Bindemittel (c) eingebettet sind, wodurch die Widerstandsschicht (2) hart und gleitfähig ist, und dass die für die Griffelbewegung vorgesehene Oberfläche (2') der Widerstandsschicht (2) die auf einen glatten, entfernten Zwischenträger aufgebrachte Unterfläche der ausgehärteten Widerstandsmasse ist.

2. Einrichtung nach Anspruch 1, dadurch gekennzeichnet, dass die Trägerpartikel (a) aus Aluminiumoxid oder Siliziumdioxid oder Aluminium-Siliziumdioxid bestehen.

3. Einrichtung nach Anspruch 1 oder 2, dadurch gekennzeichnet, dass die Trägerpartikel (a) platten- oder linsenförmige Gestalt aufweisen.

4. Einrichtung nach einem der vorhergehenden Ansprüche, dadurch gekennzeichnet, dass die Abmessungen der Trägerpartikel (a) überwiegend bei 5 µm liegen.

5. Einrichtung nach einem der vorhergehenden Ansprüche, dadurch gekennzeichnet, dass etwa 80 Gewichtsprozent beschichteter Trägerpartikel (a, b) in 20 Gewichtsprozent Bindemittel (c) eingelagert sind.

6. Einrichtung nach Anspruch 1, dadurch gekennzeichnet, dass die Trägerpartikel (a) mit pyrolytischem Kohlenstoff und mit einer Metallverbindung beschichtet sind.

7. Einrichtung nach einem der vorhergehenden Ansprüche, dadurch gekennzeichnet, dass die Griffelspitze (43) eine Stahlspitze ist.

8. Einrichtung nach einem der vorhergehenden Ansprüche, mit einer Steuereinheit (19), die über den Elektrodenanordnungen (5 bis 8) vorgeschaltete Halbleiterschalter (15 bis 18) eine Gleichspannung (13, 14) zyklisch an die beiden Elektrodenpaare (5, 6 bzw. 7, 8) legt und zyklisch die von einem Analog/Digital-Wandler (22) digitalisierten, vom Griffel (10) abgegriffenen Teilspannungen aufnimmt und als digitale x-y-Koordinatenwerte der jeweiligen Griffelposition an einen Rechner (25) bzw. einen Bildschirm (3) weiterleitet und wobei die Punktelektroden (9) jeder Elektrodenanordnung (5 bis 8) mit Dioden (11) oder mit Halbleiterschaltern (15 bis 18) voneinander entkoppelt sind.

9. Einrichtung nach einem der vorhergehenden Ansprüche, dadurch gekennzeichnet, dass die Widerstandsschicht (2) auf einen gegenüber der Kontaktplatte (1) getrennten, austauschbaren Träger aufgebracht ist und an dem Träger eine Kodierung vorgesehen ist.

10. Einrichtung nach einem der vorhergehenden Ansprüche, dadurch gekennzeichnet, dass der Abstand der Punktelektroden (9) so bemessen ist, dass die an sie angeschlossenen Kopplungselemente (11) bei einer zwischen ihnen bestehenden Potentialdifferenz sperren.

11. Einrichtung nach einem der vorhergehenden Ansprüche, wobei der Griffel (10) eine Griffhülse (32, 33, 38), an deren Spitze eine dieser gegenüber elektrisch isolierte Spitzenelektrode (43) angeordnet ist, und eine manuell zu betätigende Schalteinrichtung aufweist, die ein Erfassungssignal erzeugt, auf das hin die x-y-Position des Griffels (10) einer Datenerfassungseinrichtung (25) zugeführt wird, dadurch gekennzeichnet, dass die Spitzenelektrode (43) frei von der Schalteinrichtung mechanisch fest an der Griffhülse (32, 33 38) angeordnet ist, dass die Griffhülse elektrisch leitend ist und an ihrer Aussenseite eine ihr gegenüber elektrisch isolierte Flächenelektrode (41) angeordnet ist und dass die Flächenelektrode (41) und die Griffhülse mit einem Schaltelement (48) verbunden sind, das das Erfassungssignal erzeugt, sobald die Griffhülse und die Flächenelektrode (41) manuell berührt sind.

12. Einrichtung nach Anspruch 11, dadurch gekennzeichnet, dass die Flächenelektrode (41) etwa die Grösse einer Fingerkuppe aufweist und im Zeigefingerbereich der Griffhülse (32, 33, 38) angeordnet ist.

## Claims

1. Device for detecting an x-y position, comprising a contact plate (1) with a laminar resistance layer (2) on whose four sides electrode arrangements (5 to 8) are provided, wherein a voltage (13, 14) is alternately applied to two opposite electrode arrangements (5, 6; 7, 8) and each electrode arrangement (5 to 8) is formed from a plurality of point electrodes (9) decoupled with respect to each other, and a stylus (10) which picks up therefrom a partial voltage corresponding to its position on the resistance layer (2), characterised in that the stylus (10) has a hard point and in that the resistance layer (2) comprises carrier particles (a) with a hardness between 5 and 9 on the Mohs' scale of hardness, which are coated pyrolitically with carbon (b) and embedded in a bonding agent (c), whereby the resistance layer (2) is hard and slidable, and in that the surface (2') of the resistance layer (2) provided for the movement of the stylus is the undersurface of the hardened resistance material which is applied on a smooth, remote intermediate carrier.

2. Device according to claim 1, characterised in that the carrier particles (a) comprise aluminium oxide and silicon dioxide or aluminium silicon dioxide.

3. Device according to claim 1 or 2, characterised in that the carrier particles (a) have a plate-like or lenticular shape.

4. Device according to one of the preceding claims, characterised in that the dimensions of the carrier particles (a) are predominantly 5 µm.

5. Device according to one of the preceding claims, characterised in that approximately 80% by weight of coated carrier particles (a, b) are embedded in 20% by weight of bonding agent.

6. Device according to claim 1, characterised in that the carrier particles (a) are coated with pyrolytic carbon and with a metal compound.

7. Device according to one of the preceding claims, characterised in that the stylus point (43) is a steel point.

8. Device according to one of the preceding claims, with a control unit (19) which, by means of semiconductor switches (15 to 18) connected in series with the electrode arrangements (5 to 8), cyclically applies a direct voltage (13, 14) to the two pairs of electrodes (5, 6 or 7, 8) and cyclically receives the partial voltages digitalised by an analog/digital converter (22) and picked up by the stylus (10), and conveys them as digital x-y co-ordinate values of the respective stylus position to a computer (25) or an image screen (3), and whereby the point electrode (9) of each electrode arrangement (5 to 8) are decoupled from each other diodes (11) or with semi-conductor switches (15 to 18).

9. Device according to one of the preceding claims, characterised in that the resistance layer (2) is applied to a replaceable carrier which is separate with respect to the contact plate (1), and coding is provided on the carrier.

10. Device according to one of the preceding claims, characterised in that the spacing of the point electrodes (9) is so dimensioned that the coupling elements (11) attached to them block when there is a potential difference between them.

11. Device according to one of the preceding claims, wherein the stylus (10) has a grip sleeve (32, 33, 38) at the point of which there is arranged a point electrode (43) electrically insulated with respect thereto, and a switch device to be actuated manually, which produces a pick-up signal, to which is fed the x-y position of the stylus (10) of a data pick-up device (25), characterised in that the point electrode (43) is arranged free from the switch device, mechanically fixed to the grip sleeve (32, 33, 38), in that the grip sleeve is electrically conductive and on its outer side there is arranged a surface electrode (41) electrically insulated with respect to it, and in that the surface electrode (41) and the grip sleeve are connected to a switch element (48), which produces the pick-up signal as soon as the grip sleeve and the surface electrode (41) are manually touched.

12. Device according to claim 11, characterised in that the surface electrode (41) has substantially the size of the dome of a finger and is arranged in the index finger area of the grip sleeve (32, 33, 38).

## Revendications

1. Dispositif pour capter une position x-y, se composant d'une plaque (1) de contact comportant une couche résistante surfacique (2) sur les quatre côtés de laquelle sont prévus des ensembles d'électrodes (5 à 8), une tension (13, 14) étant appliquée alternativement à deux ensembles d'électrodes mutuellement opposés (5, 6; 7, 8) et chaque ensemble d'électrodes (5 à 8) étant constitué par plusieurs électrodes ponctuelles (9) mutuellement découplées, et d'un crayon (10), qui prend sur la couche résistante (2) une tension partielle correspondant à sa position sur celle-ci, caractérisé en ce que le crayon (10) comporte une pointe dure et en ce que la couche résistante (2) se compose de particules porteuses (a) ayant une dureté comprise entre 5 et 9 sur l'échelle de dureté de Mohs, qui sont revêtues pyrolytiquement de carbone (b) et qui sont noyées dans un liant (c), afin que la couche résistante (2) soit dure et apte au glissement, et en ce que la surface (2'), prévue pour le mouvement du crayon, de la couche résistante (2) est consituée par la surface inférieure de la masse résistante durcie qui a été placée sur un support intermédiaire lisse enlevé ensuite.

2. Dispositiv selon la revendication 1, caractérisé en ce que les particules porteuses (a) sont formées d'oxyde d'aluminium, ou bien de dioxyde de silicium, ou bien de dioxyde de silicium-aluminium.

3. Dispositif selon la revendication 1 ou 2, caractérisé en ce que les particules porteuses (a) ont un profil en forme de plaquettes ou de lentilles.

4. Dispositif selon l'une des revendications précédentes, caractérisé en ce que les dimensions des particules porteuses (a) sont en majeure partie de 5 µm.

5. Dispositif selon l'une des revendications précédentes, caractérisé en ce qu'environ 80% en poids de particules porteuses revêtues (a, b) sont mélangées à 20% en poids de liant (c).

6. Dispositif selon la revendication 1, caractérisé en ce que les particules porteuses (a) sont revêtues de carbone pyrolytique et d'un composé métallique.

7. Dispositif selon l'une des revendications précédentes, caractérisé en ce que la pointe (43) du crayon est une pointe en acier.

8. Dispositif selon l'une des revendications précédentes, comportant une unité (19) de commande, qui applique cycliquement, par l'intermédiaire d'interrupteurs semi-conducteurs (15 à 18) branchées en série par l'intermédiaire des ensembles d'électrodes (5 à 8), une tension continue (13, 14) aux deux paires d'électrodes (5, 6 et 7, 8) et qui reçoit cycliquement les tensions partielles prises par le crayon (10) et converties numériquement par un convertisseur analogique-numérique (22), en transmettant sous la forme de valeurs numériques de coordonnées (x-y) la position correspondante du crayon à un calculateur (25) ou à un écran (3) de visualisation, les électrodes ponctuelles (9) de chaque ensemble d'électrodes (5 à 8) étant découplées mutuellement à l'aide de diodes (11) ou d'interrupteurs semi-conducteurs (15 à 18).

9. Dispositif selon l'une quelconque des revendications précédentes, caractérisé en ce que la couche résistante (2) est déposée sur un support échangeable et séparé de la plaque (1) de contact, et un codage est prévu sur le support.

10. Dispositif selon l'une des revendications précédentes, caractérisé en ce que l'espacement des électrodes ponctuelles (9) est dimensionné de telle sorte que les éléments de couplage (11) auxquels elles sont reliées soient bloqués lorsqu'il existe une différente de potentiel entre elles.

11. Dispositif selon l'une des revendications précédentes, où le crayon (10) comporte un manchon de prise (32, 33, 38), à la pointe duquel est disposée une électrode (43) à pointe, isolée électriquement par rapport à celui-ci, ainsi qu'un dispositif de commande à actionner manuellement et qui produit un signal de captage en vue de la transmission de la position x-y du crayon (10) à un dispositif (25) de saisie de données, caractérisé en ce que l'électrode (43) à pointe est disposée, librement par rapport au dispositif de commande, en étant fixée mécaniquement sur le manchon de prise (32, 33, 38), en ce que le manchon de prise est électriquement conducteur et comporte sur son côté extérieur une électrode surfacique (41) électriquement isolée par rapport à lui et en ce que l'électrode surfacique (41) et le manchon de prise sont reliés à un élément de commande (48) qui produit le signal de captage aussitôt que le manchon de prise et l'électrode surfacique (41) subissent un contact manuel.

12. Dispositif selon la revendication 11, caractérisé en ce que l'électrode surfacique (41) a à peu près la grandeur d'une extrémité de doigt et est placée dans la zone occupée par l'index d'une main sur le manchon de prise (32, 33, 38).

Fig.1

# Fig. 2

# Fig. 3

0 112 975

## Fig.4